(19) Europäisches Patentamt
European Patent Office
Office européen des brevets

(11) **EP 1 660 414 B1**

(12) **EUROPÄISCHE PATENTSCHRIFT**

(45) Veröffentlichungstag und Bekanntmachung des Hinweises auf die Patenterteilung:
**15.04.2015 Patentblatt 2015/16**

(21) Anmeldenummer: **04786234.7**

(22) Anmeldetag: **26.08.2004**

(51) Int Cl.:
*C04B 16/08* (2006.01)     *C04B 28/02* (2006.01)
*C04B 111/28* (2006.01)    *C04B 111/52* (2006.01)

(86) Internationale Anmeldenummer:
**PCT/EP2004/051913**

(87) Internationale Veröffentlichungsnummer:
**WO 2005/021460 (10.03.2005 Gazette 2005/10)**

(54) **WÄRME- UND TRITTSCHALLDÄMMSTOFF MIT GERINGEN BINDEMITTELGEHALTEN**

THERMAL AND SOUND INSULATING MATERIAL WITH LOW CONTENT OF BINDER

MATÉRIAU D'ISOLATION THERMIQUE ET PHONIQUE À FAIBLE TAINEUR EN LIANT

(84) Benannte Vertragsstaaten:
**AT BE BG CH CY CZ DE DK EE ES FI FR GB GR HU IE IT LI LU MC NL PL PT RO SE SI SK TR**

(30) Priorität: **26.08.2003 EP 03019269**

(43) Veröffentlichungstag der Anmeldung:
**31.05.2006 Patentblatt 2006/22**

(73) Patentinhaber:
• **Sika Technology AG**
  **6340 Baar (CH)**
• **SIKA ÖSTERREICH GMBH**
  **6700 Bludenz-Bings (AT)**

(72) Erfinder:
• **JERNEI, Michael**
  **A-6700 Bludenz (AT)**

• **AUSSERWINKLER, Christian**
  **A-6900 Bregenz (AT)**
• **PETTERLE, Christoph**
  **A-6850 Dornbirn (AT)**

(56) Entgegenhaltungen:
**EP-A- 0 819 662     DE-A- 2 836 855**
**DE-A- 2 930 615     DE-A- 3 345 550**
**DE-A- 19 731 485    DE-U- 20 017 460**
**GB-A- 2 028 299**

• **PATENT ABSTRACTS OF JAPAN Bd. 018, Nr. 525 (C-1257), 5. Oktober 1994 (1994-10-05) & JP 06 183814 A (BRIDGESTONE CORP; others: 01), 5. Juli 1994 (1994-07-05)**

**Beschreibung**

**Technisches Gebiet**

Die Erfindung betrifft Dämmstoffe für Wärme- und Trittschalldämmung, welche auf Basis von Schaumstoffgranulaten und zementösen Bindemitteln formuliert werden.

**Stand der Technik**

Wärme- und Trittschalldämmungen sind im modernen Gebäudebau sehr wichtig. Es ist bekannt, dass Schaumstoffe gute Dämmeigenschaften aufweisen. Weit verbreitet sind Schaumstoffe auf Basis von Polystyrol oder Polyurethan, sowie Steinwoll- oder Mineralwolleplatten. Üblicherweise werden diese Platten anschliessend mit einer Deckschicht, zum Beispiel erdfeucht verarbeitetem Unterlagsmörtel, beziehungsweise Beton, ("Estrich" genannt) oder Fliessestrichen oder Plattenkonstruktionen (Holz, etc.), als Tragschicht überdeckt. Der Unterbau unter diesen Tragschichten besteht daher hauptsächlich im Moment aus zwei separat zu verarbeitenden Teilen. Zuerst wird eine Schüttung beispielsweise aus Splitt (gebunden oder ungebunden) als Niveauausgleich eingebracht, dann werden Platten sehr aufwendig durch Zuschneiden verlegt. Um dies zu umgehen, wurden deshalb Anstrengungen gemacht, fugenlose Dämmstoffe auf Zementbasis und Schaumstoffgranulate zu entwickeln, die durch Wasser gehärtet werden. Da hierfür jedoch die Schaumstoffgranulate durch die Zementmatrix verfestigt werden müssen, weist ein solcher Dämmstoff, welcher lediglich auf einem Zementbindemittel aufgebaut ist, einen sehr hohen Zementgehalt und dadurch bedingt, neben einem hohen spezifischen Gewicht, eine sehr schlechte Wärme- und Trittschalldämmung auf. Üblicherweise sind hier Mindestbindemittelgehalte von 120 kg Zement pro $m^3$ notwendig, um ausreichende Tragkraft zu erreichen. Es wurde deshalb versucht den Zementgehalt zu reduzieren. So wurde in DE 3345550 A1 gefunden, dass der Zusatz von hydrolysierter Kieselsäure eine solche Reduktion des Zementes in einem Polystyrol enthaltenden Wärmedämmputz für die Aussenseite von Gebäuden erlaubt. EP 0 819 662 beschreibt einen Dämmstoff zur Wärme- und Trittschalldämmung eines Bodens, der neben einem Schaumstoffgranulat und einem zementösen Bindemittel einen Anteil von amorpher Kieselsäure von wenigstens 10 Gew.-%, bezogen auf den Zement, aufweist. Die Wirkungsweise wird hierbei durch die puzzolane Wirkung der eingesetzten Kieselsäure erklärt.

Diese mineralischen Bindemittel des Standes der Technik ermöglichen realistischerweise eine Reduktion des Bindemittelgehalts auf lediglich 60 kg und mehr pro $m^3$ Styroporgranulatschüttung. Diese Schüttungen -ausreichend tragfähig ausgeführt- sind relativ starr und weisen nach dem Erhärten eine dynamische Steifigkeit vor Begehung zwischen 40 und 60 $MN/m^3$ auf und zeigen daher nur eine mittlere Trittschallminderung. Im Gegensatz zu den hoch zementhaltigen Schüttungen (100 kg und mehr) brechen jedoch beim direkten Begehen vor der Applikation des Zementestrichs die zementösen Bindungen zwischen den Granulatkörnern teilweise und die Schüttung setzt sich und erweicht.

Für die Bestimmung der Dämmeigenschaften werden einerseits die Wärmeleitfähigkeit [W/mK] und andererseits die Trittschallminderung [dB], beziehungsweise, damit verbunden, die dynamische Steifigkeit [$MN/m^3$] ermittelt.

Gebundene Granulatschüttungen gemäss dem Stand der Technik weisen typischerweise Wärmeleitfähigkeiten von grösser 0.044 W/mK und dynamischen Steifigkeiten von ca. 20 $MN/m^3$ nach Belastung auf.

Wünschenswert sind daher Systeme, die mit deutlich verbesserter Bindekraft und verbessertem Rückstellverhalten gleichwertige oder bessere Wärme- und Trittschalleigenschaften aufweisen, und damit in der Anwendung deutlich sicherer sind.

**Darstellung der Erfindung**

Aufgabe der vorliegenden Erfindung war es Dämmstoffe auf Basis eines zementösen Bindemittels zu entwickeln, die einen möglichst geringen Anteil an Zement aufweisen und trotzdem nach Aushärtung mit Wasser eine grosse Eigenfestigkeit sowie exzellente Wärme- und Trittschalldämmung, insbesondere auch nach erfolgter mechanischer Belastung, aufweisen.

Es wurde gefunden, dass dies durch eine Dämmstoffzusammensetzung erreicht wird, die neben einem polymeren geschlossenzelligen Schaumstoffgranulat und einem zementöses Bindemittel zusätzlich mindestens ein Wasserrückhaltemittel und mindestens einen Dispersionskunststoff umfasst.

Überraschenderweise wurde gefunden, dass diese Verbesserung gegenüber dem Stand der Technik durch den kombinierten Einsatz der Inhaltsstoffe erreicht wird. Insbesondere als einzigartig wurde eine synergistische Wirkung von Wasserrückhaltemittel und Dispersionskunststoff gefunden.

Es hat sich gezeigt, dass die erfindungsgemässe ausgehärtete Dämmstoffzusammensetzung im Vergleich zum Stand der Technik stark elastifiziert ist, was sich in einem erhöhten Rückstellverhalten äussert, da die Bindungen zwischen den Schaumstoffkugeln unter üblicher Belastung nicht mehr brechen.

Die Erhöhung der Elastizität des ausgehärteten Dämmstoffes geht mit exzellenten Dämmeigenschaften gegenüber Wärme- oder Trittschallenergie einher. Bei Belastung eines solchen elastifizierten Dämmstoffes, wie sie zum Beispiel durch Begehen eines Estrichbodens erfolgen, bleiben - trotz einem stark verringertem Zementanteil - die Bindekräfte innerhalb des Dämmstoffs bedeutend länger erhalten.

**Kurze Beschreibung der Zeichnungen**

Im folgenden werden anhand der Zeichnungen Ausführungsbeispiele der Erfindung näher erläutert. Gleiche Elemente sind in den verschiedenen Figuren mit den gleichen Bezugszeichen versehen.

Fig. 1    einen Estrichbodenaufbau im Querschnitt im Wandbereich
Fig. 2    einen Estrichbodenaufbau im Querschnitt mit Leitungen
Fig. 3    ein Messdiagramm eines Dämmstoffprobekörpers
Fig. 4    die Messanordnung für die Bestimmung der dynamischen Steifigkeit
Fig. 5    die schematische Messanordnung gemäss Fig.4

**Weg zur Ausführung der Erfindung**

Die vorliegende Erfindung betrifft eine Dämmstoffzusammensetzung zur Trittschall- und Wärmedämmung, umfassend ein polymeres geschlossenzelliges Schaumstoffgranulat, ein zementöses Bindemittel sowie mindestens ein Wasserrückhaltemittel und mindestens ein Dispersionskunststoff.

Die Dämmstoffzusammensetzung enthält ein zementöses Bindemittel, welches zumindest einen Zement, insbesondere mindestens einen Zement gemäss Euronorm EN 197, enthält. Bevorzugt sind Portlandzemente, Sulfoaluminatzemente und Tonerdeschmelzzemente, insbesondere Portlandzement. Mischungen von Zementen können zu besonders guten Eigenschaften führen. Besonders geeignet sind Mischungen von mindestens einem Portlandzement mit mindestens einem Sulfoaluminatzement oder mindestens einem Tonerdeschmelzzement. Für eine schnelle Aushärtung kommen vor allem zementöse Schnellbindemittel zum Einsatz, die vorzugsweise mindestens einen Tonerdeschmelzzement oder eine andere Aluminatquelle, wie beispielsweise aluminatspendende Klinker, und gegebenenfalls Calciumsulfat, in Form von Anhydrit, Halbhydrat- oder Dihydratgips; und/oder Calciumhydroxid enthalten.

Der Anteil des Zementes ist mit 100 kg/m$^3$ der mit Wasser angemachten Dämmstoffstoffzusammensetzung nach oben begrenzt.

Das zementöse Bindemittel kann weiterhin Bestandteile ausgewählt aus der Gruppe der Gipse und Calciumhydroxid enthalten.

Die Dämmstoffzusammensetzung enthält weiterhin ein polymeres geschlossenzelliges Schaumstoffgranulat. Dieses Schaumstoffgranulat weist vorzugsweise eine Schüttdichte zwischen 10 und 20 kg/m$^3$, insbesondere zwischen 12 und 18 kg/m$^3$ auf. Bevorzugt sind Polystyrolgranulate, insbesondere recyclierte Polystyrolgranulate.

Üblicherweise wird das Schaumstoffgranulat derart eingesetzt, dass das Verhältnis des Schaumstoffgranulats zu Zement zwischen 20 Gew.-% und 120 Gew.-% liegt. Bevorzugt liegt dieses Verhältnis zwischen 30 Gew.-% und 100 Gew.-%, insbesondere zwischen 50 Gew.-% und 75 Gew.-%. Besonders bevorzugt ist ein Verhältnis von 60 bis 75 Gew.-%.

Es versteht sich, dass es unter gewissen Umständen von Vorteil sein kann, mehrere verschiedene polymere geschlossenzellige Schaumstoffgranulate einzusetzen, sowohl in Bezug auf deren chemische Zusammensetzungen als auch in Bezug auf deren mittleren Partikeldurchmesser. Die eingesetzten Schaumstoffgranulate weisen stets eine gewisse Partikelgrössen-Verteilung auf. Üblicherweise liegt die Partikelgrösse zwischen 0 und 8 mm. Vorzugsweise ist der Anteil unter 1 mm geringer als 10 Gew.-% und der Anteil über 2 mm bei über 75 Gew.-%, da der Bindemittelbedarf durch kleinere Partikel zusätzlich erhöht wird.

Die Dämmstoffzusammensetzung enthält weiterhin mindestens ein Wasserrückhaltemittel. Ein "Wasserrückhaltemittel" wird in dieser gesamten Schrift wie folgt definiert:

Ein Wasserrückhaltemittel ist im Sinne dieses Patentes eine Substanz, welche nach einer modifizierten Wolf-II-Methode, wie im Folgenden erklärt, ein Wasserrückhaltevermögen aufweist:

- von mehr als 85 % für ein organisches Wasserrückhaltemittel bei einem Wasser/Zement-Verhältnis (="w/z") von 0.7
- von mehr als 33% für ein anorganisches Wasserrückhaltemittel bei einem w/z von 0.4
- von mehr als 85 % bei einem w/z von 0.7 für eine Mischung von organischen und anorganischen Wasserrückhaltemittel:

Es wird auf einer ebenen Glasplatte ein Zellulosefilterpapier (Schleicher & Schuell, D-37582 Dassel, Nr. 2294 0 11 cm), dann ein dünnes Zellulosevlies (Schleicher & Schuell, D-37582 Dassel, Nr. 0980/1 Ø 11 cm) aufgelegt und darauf ein Plastikring (Innendurchmesser 90 mm und Höhe 15 mm) gelegt.

Der Zementleim wird durch Mischen während 3 Minuten mit einem Kunststoffspatel von Zement (Milke Cem I 52.5 R Werk Geseke), Wasser, entsprechend einem gewichtsbezogenen Wasser/Zement-Verhältnis (="w/z") von 0.7, beziehungsweise 0.4, und der jeweils als Wasserrückhaltemittel zu testenden Substanz hergestellt und sogleich bündig mit der Oberkante in den Ring eingefüllt (Bedarf ca. 180g Zementleim). Die Dosierung der zu testenden Substanz muss für diesen Test zwischen 0.4 Gew.-% und 5 Gew.-% für ein organisches Wasserrückhaltemittel und zwischen 12 Gew.-% und 15 Gew.-% für ein anorganisches Wasserrückhaltemittel betragen. Für eine Mischung von anorganischen und organischen Wasserrückhaltemitteln beträgt für diesen Test die Dosierung zwischen 0.4 Gew.-% und 5 Gew.-% für das organische Wasserrückhaltemittel und zwischen 12 Gew.-% und 15 Gew.-% für das anorganisches Wasserrückhaltemittel.

Nach 3 Minuten Einwirkdauer ab Ringbefüllung wird die Wasserabgabe an das Zellulosefilterpapier durch Differenzwiegung desselben vor und nach der Wasseraufnahme ermittelt und jeweils auf 100g Zementleim rückgerechnet. Aus der so bestimmten Wasserabgabe $m_x$ für die als Wasserrückhaltemittel zu testende Substanz und $m_{ref}$ für den Nullversuch, d.h. Zement ohne Substanz, wird das Wasserrückhaltevermögen (*WRV*) nach der folgenden Formel bestimmt.

$$WRV = \frac{m_{ref} - m_x}{m_{ref}}$$

Das Wasserrückhaltemittel kann eine organische oder eine anorganische Verbindung sein. Anorganische Wasserrückhaltemittel lassen sich typischerweise bei den Mehrschichtsilikaten wie Bentonit, Smektit, Montomorillonit, oder auch bei kalzinierten Kaolinen, insbesondere Metakaolin, finden. Als besonders geeignetes anorganisches Wasserrückhaltemittel hat sich Metakaolin erwiesen.Organische Wasserrückhaltemittel lassen sind typischerweise bei Celluloseethern, Methylcellulosen, Hydroxypropylmethylcellulosen, Hydroxyethylcellulosen, Carboxymethylcellulosen, und weiteren Cellulosederivaten, Stärkeethem, Welan Gum oder synthethischen Verdickern wie Polyacrylsäure oder PU-Acrylaten finden. Als besonders geeignet haben sich Hydroxyalkylmethylcellulosen, insbesondere Hydroxypropylmethylcellulosen und Hydroxyethylmethylcellulosen gezeigt.

Der verwendete Gewichtsanteil der Summe aller Wasserrückhaltemittel hängt stark von den erwünschten Dämm- und mechanischen Eigenschaften der ausgehärteten Dämmstoffzusammensetzung sowie des verwendeten Wasserrückhaltemittels ab und bewegt sich typischerweise zwischen 0.1 und 25 Gew.-%, bezogen auf den Zement.

Anorganische Wasserrückhaltemittel werden vorteilhaft in einer Konzentration zwischen 0.2 und 25 Gew.-%, bevorzugt zwischen 0.5 und 9 Gew.-%, insbesondere zwischen 0.5 und 3 Gew.-%, bezogen auf den Zement eingesetzt. Organische Wasserrückhaltemittel werden vorteilhaft in einer Konzentration zwischen 0.1 und 9 Gew.-%, bevorzugt zwischen 0.5 und 5 Gew.-%, insbesondere zwischen 1 und 4 Gew.-%, bezogen auf den Zement eingesetzt.

Besonders bevorzugt werden organische Wasserrückhaltemittel.

Die Dämmstoffzusammensetzung enthält weiterhin mindestens einen Dispersionskunststoff.

Unter einem Dispersionskunststoff wird in der gesamten vorliegenden Schrift ein organisches Copolymer verstanden, welches in einer wässrigen Dispersion oder als redispergierbares Pulver, beispielsweise erhalten durch eine Sprühtrocknung einer Dispersion, vorliegt Solche Pulver sind dem Fachmann auch als Kunststoffdispersionspulver bekannt. Dieses Copolymer ist insbesondere ein Copolymer von mindestens zwei, bevorzugt von zwei, unterschiedlichen ethylenisch ungesättigten Monomeren, von welchen mindestens ein Co-Monomer, bevorzugt alle Co-Monomere, ausgewählt sind aus der Gruppe umfassend Ethylen, Butadien, Methacrylsäure, Acrylsäure, Methacrylsäureestern, Acrylsäureestern, Styrol, Vinylacetat und Acrylonitril.

Im allgemeinen als geeignet gezeigt haben sich die Copolymere Acrylsäure/Styrol, Methacrylsäure/Styrol, Styrol/Butadien und Vinylacetat/Ethylen. Unter gewissen Umständen ist es jedoch vorteilhaft Vinylacetat-freie Polymere zu verwenden.

Besonders bevorzugt sind Acrylsäure/Styrol- und Methacrylsäure/Styrol-Copolymere.

Diese Copolymere werden nach den üblichen dem Fachmann bekannten Polymerisationsverfahren hergestellt.

Der Dispersionskunststoff weist typischerweise ein Molekulargewicht im Bereich zwischen 30'000 und 10'000'000 g/mol, insbesondere zwischen 100'000 und 5'000'000 g/mol, auf. Besonders bevorzugt sind Molekulargewichte zwischen 200'000 und 2'000'000 g/mol.

Die Partikel des Dispersionskunststoff sind in einer feinteiligen wässrigen Kunststoffdispersion vorteilhaft zwischen 0.04 bis 0.5 $\mu$m, insbesondere zwischen 0.1 bis 0.2 $\mu$m, oder in einer grobdispersen wässrigen Dispersion vorteilhaft zwischen 2 bis 5 $\mu$m, und als Kunstoffdispersionspulver 0.5 bis 10 $\mu$m nach Redispergierung.

Überraschenderweise hat sich weiterhin gezeigt, dass bei gleichbleibender Elastizität der Dämmung höhere Bindefestigkeiten mit Dispersionskunststoffen, die einen geringen elastischen Charakter, also einer hohen Glasumwandlungstemperatur, aufweisen, erreicht werden.

Der Dispersionskunststoff wird in einem Anteil von 2 bis 15 Gew.-% Feststoff bezogen auf den Zement eingesetzt. Besonders bevorzugt sind Mengen des Dispersionskunststoff zwischen 5 und 15 Gew.-%.

Gegebenenfalls weist die Dämmstoffzusammensetzung zusätzlich noch mindestens einen Füllstoff auf, welcher kein geschlossenzelliges Schaumstoffgranulat, kein zementöses Bindemittel, kein Wasserrückhaltemittel und kein Dispersionskunststoff ist und dessen mittlere Teilchengrösse so gewählt ist, dass das Verhältnis mittlere Teilchengrösse des Füllstoffs zu mittlere Teilchengrösse des geschlossenzelligen Schaumstoffgranulates kleiner 1, besonders zwischen 0.01 und 0.5, insbesondere zwischen 0.02 und 0.25 ist.

Solche Füllstoffe können elastisch oder starr sein. Bevorzugt sind jedoch elastische Füllstoffe. Als starre Füllstoffe kommen beispielsweise Glaskugeln, Glashohlkugeln, Blähglaskugeln, Sand, Quarzmehl in Betracht. Als elastische Füllstoffe kommen insbesondere Gummi oder Kautschuk, bevorzugt in Granulat- oder Pulverform, in Betracht.

Der Einsatz dieser Füllstoffe ist speziell dann vorteilhaft, wenn ein Dämmstoff mit geringem Anteil an zementösem Bindemittel, typischerweise im Bereich von zwischen 15 und 30 kg pro m$^3$ der Zusammensetzung, erzielt werden soll.

Im Falle von grösseren Anteilen an zementösen Bindemitteln, typischerweise einem Bindemittelanteil von mehr als 25 kg pro m$^3$ der Zusammensetzung, kann die Dämmstoffzusammensetzung spezielle Feststoffpartikel enthalten, wie zum Beispiel Glimmerplättchen, recycliertes Altreifengranulat, wasseraufnehmende Kunststoff-Fasern, hydrophobe Kunststoffpartikel, wie beispielsweise Fetzen von Polyethylen- oder Polypropylenfolien. Durch diese Partikel können beabsichtigt Sollbruchstellen in das Dämmmaterial eingebracht werden, was zu geringeren dynamischen Steifigkeiten, bis zu 5 MN/m$^3$, und damit zu besseren Dämmeigenschaften, verglichen mit denselben Zusammensetzungen ohne diese Feststoffpartikel, führt, ohne dass die mechanische Belastbarkeit allzu stark verringert wird. Die Partikelgrösse ist sehr stark abhängig von der individuellen Zusammensetzung beziehungsweise den Produktanforderungen und muss im Einzelfall durch den Fachmann im Rahmen seines Wissens bestimmt, beziehungsweise optimiert, werden.

Die Dämmstoffzusammensetzung kann des weiteren noch andere Bestandteile enthalten. Solche Bestandteile sind beispielsweise Pigmente, Flammschutzmittel, UV-Stabilisatoren, Komplexbildner, Erhärtungs- und/oder Abbinde-Beschleuniger, Filmbildehilfsmittel, Erhärtungs- und/oder Abbinde-Verzögerer, Korrosionsinhibitoren, Hydrophobierungsmittel, Luftporenbildner, Entschäumer, Farbstoffe, Tenside, Geruchsstoffe oder Biozide.

Die Dämmstoffzusammensetzung ist frei von amorpher Kieselsäure.

Der Fachmann kann sein Fachwissen über Granulometrie heranziehen, um die Dämmstoffzusammensetzung auf die Teilchengrösse der einzelnen Bestandteile hin zu optimieren.

Im Rahmen der vorliegenden Erfindung hat sich gezeigt, dass das Zufügen von lediglich Dispersionskunststoff zu zementösem Bindemittel und Schaumstoffgranulat nicht den gewünschten Effekt gibt.

Zwar wurde gefunden, dass durch die Zugabe von Dispersionskunststoff, sowohl als Pulver oder als wässrige Dispersion, Dämmstoffe mit höheren mechanischen Werten bei Belastung erreicht werden. Dies erforderte jedoch einerseits einen sehr hohen Einsatz an Dispersionskunststoffen, typischerweise von 30 bis zu 200 Gew.-% Dispersionskunststoff, bezogen auf den Zementgehalt. Andererseits wiesen diese so gefertigten Körper nach Aushärtung keine merkliche Verringerung der dynamischen Steifigkeit, d.h. Werte unter 25 MN/m$^3$ auf, und es wurde - damit verbunden- keine markante Verbesserung der Dämmeigenschaften erreicht. Diese hohen dynamischen Steifigkeiten werden durch sehr feste Bindungen zwischen den Granulatkörnern bei gleichzeitiger Versteifung der normalerweise elastischen Körner durch die dicke, feste Bindemittelschicht rund um die Körner, erklärt. Des weiteren wiesen solche Systeme sehr lange Trockenzeiten von typischerweise mindestens 3 Tagen auf. Schliesslich führte der notwendig hohe Anteil des eingesetzten Dispersionskunststoff zu sehr hohen Kosten der fertigen Dämmstoffzusammensetzung. Aufgrund all dieser Punkte konnte gezeigt werden, dass der Zusatz von lediglich Dispersionskunststoffen unter praxisrelevanten Aspekten keine genügende Verbesserung verglichen mit den Dämmstoffen des Standes der Technik ergibt.

Wird lediglich ein Wasserrückhaltemittel zum zementösen Bindemittel und dem geschlossenzelligen polymeren Schaumstoffgranulat hinzugegeben, lassen sich zwar Dämmstoffe mit einem wesentlich kleineren Anteil an Zement als sie aus dem Stand der Technik bekannt sind, realisieren, welche zudem eine akzeptable Festigkeit aufweisen. Es werden aber nicht derart gute Eigenschaften erreicht, wie sie in Kombination von Wasserrückhaltemittel mit Dispersionskunststoff erreicht werden.

Erst der kombinierte Einsatz von Wasserrückhaltemittel und Dispersionskunststoff ermöglicht es, einerseits den Gehalt an Zement noch bedeutend mehr zu reduzieren, beziehungsweise den Gehalt an geschlossenzelligen polymeren Schaumstoffgranulaten zu erhöhen, was zu besseren Dämmeigenschaften mit lediglich geringen Einbussen an Festigkeiten führt.

Weiterhin lassen sich mit dem kombinierten Einsatz von Wasserrückhaltemittel und Dispersionskunststoff selbst bei tiefen Zementgehalten ohne Reduktion der Dämmeigenschaften höhere Festigkeiten erreichen.

Ein Dämmstoff basierend auf der Technologie des Standes der Technik weist -insbesondere bei tieferem Zementanteil- einen bedeutend schlechteren Verbund im ausgehärteten Dämmstoff auf, das heisst, dass bei dessen Belastungen, wie sie beispielsweise durch ein Begehen entstehen, die Bindungen zwischen den Granulatpartikeln brechen und in grossem Ausmass Schaumstoffgranulat-Partikel ausbrechen, und demzufolge der Dämmstoff "zerkrümmelt".

Die vorteilhafte Wirkung des Wasserrückhaltemittels wird dadurch erklärt, dass in den Dämmstoffen des Standes der Technik das eingesetzte Wasser, welches für die hydraulische Aushärtung des Zementes benötigt wird, durch den Schaumstoff üblicherweise in beträchtlichem Umfang aufgenommen wird, so dass an deren Oberfläche die Zementaushärtung gestört ist, und deshalb an der Schaumstoffoberfläche kein richtiger Verbund entsteht. Dies ist umso ausgeprägter je kleiner der Anteil des Zementes bezogen auf den Schaumstoff und je geringer die Anmachwassermenge ist. Durch den Einsatz von Wasserrückhaltemitteln wird dies verhindert und der Zement bildet nach der Aushärtung mit der Schaumstoffoberfläche einen ausgezeichneten Verbund, auch wenn der Anteil des Zementes im Vergleich zum Schaumstoff klein ist. Es konnte gezeigt werden, dass dadurch dass anstelle von Wasserrückhaltemittel lediglich mehr Wasser eingesetzt wird, das heisst, indem der w/z erhöht wird, das Problem nicht zufriedenstellend gelöst werden kann, weil dadurch die Aushärtung massiv verzögert wird und zu schlechten mechanischen Eigenschaften führt.

Die Wirkungsweise des Dispersionskunststoffs wird dadurch erklärt, dass die Dispersionskunststoffteilchen die Haftfestigkeit des erhärteten, starren Zementbindemittels an den elastischen Polymerschaumgranulat-Teilchen wesentlich verbessert. So hat eine Mikroskopanalyse gezeigt, dass die circa nur 20 - 30 $\mu$m dicke Bindemittelschicht auf den Granulatkugeln selbst bei Stauchung der elastischen Kugeln auf einen Bruchteil der ursprünglichen Dicke sich nicht ablöst.

Die volle Entfaltung der Elastifizierungswirkung des Dispersionskunststoffes auf die Dämmstoffzusammensetzung entfaltet sich jedoch offensichtlich erst im Zusammenspiel mit dem Wasserrückhaltemittel. Es ist äusserst überraschend, dass bereits eine relativ geringe Zugabe eines Dispersionskunststoff den gewünschten Effekt im Dämmstoff ergibt.

Es können Dämmstoffzusammensetzungen formuliert werden, die einen sehr schnellen Festigkeitsaufbau und Trocknungszeiten aufweisen, so dass beispielsweise eine daraus gefertigte Dämmschüttung bereits nach einem bis zwei Tagen begangen werden kann. Speziell in diesen Fällen kommen die bereits erwähnten zementösen Schnellbinder zum Einsatz.

Um möglichst gute Dämmeigenschaften zu erreichen, ist, wie bereits erwähnt wurde, generell darauf hin zu arbeiten, möglichst wenig zementöses Bindemittel, beziehungsweise möglichst viel Schaumstoffgranulat einzusetzen. Andererseits muss gewährleistet werden, dass ein Verbund zwischen den einzelnen Schaumstoffgranulat-Partikeln für die Gewährung der mechanischen Belastung des Dämmstoffes vorhanden ist.

Durch die Reduktion des zementösen Bindemittels muss auch das Wasser für die Wasser-Zementreduktion stark reduziert werden. Damit wird die Verarbeitung sehr schwierig, insbesondere unter Berücksichtigung, dass viele Schaumstoffgranulate selber Wasser aufnehmen, im Falle von Polystyrol sind dies typischerweise 70 - 90 Liter Wasser pro m$^3$ Granulat. Somit ist bei erwünscht tiefen Gehalten an Zement, wie beispielsweise 15 - 30 kg pro m$^3$ der Dämmstoffzusammensetzung, eine praxisgerechte Verarbeitung selbst unter starker Abweichung von den betontechnologisch üblichen Wasser/Zement-Verhältnissen nicht mehr möglich.

Durch den Einsatz von Wasserrückhaltemittel wird es nun ermöglicht, selbst bei sehr geringen Anteilen an Wasser noch genügend gute Verarbeitung als auch gute Festigkeiten zu erreichen. So wird erreicht, dass mit Wasser/Zement- Faktoren von etwa 1.0 bis etwa 2.0 Dämmstoffzusammensetzungen mit sehr guter Verarbeitung und Festigkeiten erhalten werden.

Weiterhin wird durch die Reduktion des Zementanteils die Menge des Zementleims, welcher die Schaumstoffgranulatpartikel verfestigt, derart verringert, dass die Schichten des Zementleimes sehr dünn werden und demzufolge der Verbund relativ spröde wird. Bereits eine relativ geringe Zugabe eines polymeren Dispersionskunststoffes in Mengen von beispielsweise 3 bis 15 %, bezogen auf das zementöse Bindemittel, führt zu einer ausreichenden Verfestigung der Bindungen zwischen den Schaumstoffgranulatpartikeln. Wird eine derartige zementöse Bindemittelzusammensetzung lediglich mit Wasser angemischt, das heisst in Abwesenheit des Schaumstoffgranulates, ergibt sich ein starrer betonähnlicher Mörtel. Ein solcher Mörtel ist umso starrer, je weniger Kunststoffdispersion er enthält. Bekannterweise steigt die Elastizität (sinkt der E-Modul) von zementösen Mörteln, je grösser das Verhältnis Kunststoff / Zement ist. Zur Elastifizierung von allen Arten von Mörtel werden daher üblicherweise erhöhte Mengen von Kunststoffdispersionen, speziell für starke Elastifizierungen sehr weiche Dispersionen mit einem Glasübergangspunkt unter 0°C oder tiefer, eingesetzt. Es ist demzufolge umso überraschender, dass beim Einsatz zementöser Bindemittel für Schaumstoffgranulatschüttungen der umgekehrte Effekt eintritt, so dass mit geringerer Menge einer relativ starren Kunststoffdispersion niedrigere dynamische Steifigkeiten (= elastischere Systeme) erhalten werden als mit grossen Mengen dieser oder einer weicheren Kunststoffdispersion

Es ist demzufolge umso überraschender, dass der Dämmstoff derartig gutes Rückstellverhalten nach Belastung aufweist.

Die Dämmstoffzusammensetzung kommt mit Wasser vermischt zum Einsatz. Die Menge des eingesetzten Wassers hängt stark von der Zementmenge ab. Das Wasser/Zement- Verhältnis kann jedoch abweichen von demjenigen, welches der Zement- beziehungsweise Betontechnologe üblicherweise anwendet. Das Wasser/Zement- Verhältnis liegt typischerweise im Bereich von 0.7 bis 3, insbesondere im Bereich von 0.7 bis 2.5, bevorzugt im Bereich von 1.1 bis 2.5.

Die Dämmstoffzusammensetzung kann unmittelbar vor Anwendung aus den einzelnen Bestandteilen oder Halbfabrikaten hergestellt werden oder sie kann industriell gefertigt und/oder vermischt an den Ort der Applikation transportiert werden.

Das Wasser wird unmittelbar vor der Applikation zur Dämmstoffzusammensetzung oder beim Mischen der einzelnen Komponenten davon zugemischt.

Hierfür sind unterschiedliche Varianten der Herstellung geeignet.

In einer ersten Variante wird das zementöse Bindemittel mit dem Wasserrückhaltemittel zusammen mit dem Grossteil, typischerweise etwa 90%, des Schaumstoffgranulates vermischt. Hierzu werden anschliessend zuerst das Wasser, dann der Dispersionskunststoff und anschliessend der Rest des Schaumstoffgranulates zugemischt. Falls eine Kunststoffdispersion verwendet wird, kann diese vorab mit dem Wasser vermischt und somit gleichzeitig mit dem Wasser zugefügt werden. Wird ein Kunststoffdispersionspulver eingesetzt, so kann dieses auch vor der Wasserzugabe mit dem zementösen Bindemittel, dem Wasserrückhaltemittel und dem Schaumstoffgranulat vermischt werden. Es kann sich als vorteilhaft erweisen, wenn das Wasser und die Kunststoffdispersion nicht auf einen Schlag sondern portionenweise unter Rühren zugegeben werden.

Eine weitere Variante der Herstellung besteht darin, dass das Schaumstoffgranulat vorgelegt wird, dann das Wasser, hierauf das Wasserrückhaltemittel, dann das zementöse Bindemittel und anschliessend der Dispersionskunststoff, gegebenenfalls in Form einer Dispersion zugemischt wird.

In einer bevorzugten Variante der Herstellung wird das zementöse Bindemittel mit dem Wasserrückhaltemittel sowie dem Dispersionskunststoff vorgemischt, sodann wird das Bindemittel mit dem Wasser angemischt und schliesslich wird das Schaumstoffgranulat beigemischt. Es kann sich auch hier als vorteilhaft erweisen, wenn die Komponenten nicht auf einen Schlag, sondern portionenweise unter Rühren zugegeben werden.

Eine weitere bevorzugte Variante der Herstellung besteht darin, dass zuerst das zementöse Bindemittel, mit den Wasserrückhaltemitteln gemischt werden, ein Teil des Wassers und anschliessend diese Vormischung dem Schaumstoffgranulat in zumindest zwei Stufen unter dosierter Zugabe des Wassers zugemischt wird. Das Mischgefäss wird zunächst mit etwa drei Viertel der Gesamtmenge des Schaumstoffgranulates beschickt, bevor der vorgemischte Bindemittelanteil mit dem dosierten Anmachwasser zugegeben wird. Anschliessend, oder mit dem Anmachwasser gemischt, wird der Dispersionskunststoff beigefügt. Das restliche Schaumstoffgranulat wird dann während des Mischvorganges eingefüllt.

Eine weitere Ausführungsform der Herstellung besteht darin, dass das Schaumstoffgranulat mit dem zementösen Bindemittel, Wasserrückhaltemitteln und dem Dispersionskunststoff gemischt werden, und anschliessend das Wassers zugemischt wird.

Bei allen beschriebenen Herstellvarianten wird der Mischvorgang vorteilhaft in einem für eine Druckluftförderung des Mischgutes ausgelegten Mischkessel durchgeführt. Nach dem Mischvorgang, kann die jeweilige angemachte Mischung dann mit Hilfe von Druckluft ausgefördert und über eine Schlauchleitung zum Einbringungsort transportiert werden.

Eine weitere Möglichkeit der Herstellung besteht auch darin, dass die einzelnen Komponenten im richtigen Verhältnis kontinuierlich dosiert und in einer kurzen Mischstrecke kontinuierlich gemischt und gefördert werden.

Zur Wärmedämmung wird die Dämmstoffzusammensetzung zwischen zwei Materialien unterschiedlicher Temperatur angebracht und hat die Funktion, zwischen diesen den Wärmeenergietransfer zu verhindern. Es ist klar, dass deshalb diese Dämmstoffzusammensetzung einerseits zur Wärmeisolation oder aber auch zur Kälteisolation verwendet werden kann. Zur Trittschalldämmung ist es wichtig, die Fläche, welche typischerweise im wesentlichen horizontal angeordnet ist, auf welcher die Schritte erfolgen, oder einer damit direkt verbundenen Struktur von der restlichen Gebäudestruktur durch Anbringen einer Dämmstoffzusammensetzung dazwischen voneinander akustisch abzukoppeln. Die beschriebenen Dämmstoffzusammensetzungen weisen bereits in geringen Schichtdicken von wenigen Zentimetern exzellente Dämmeigenschaften auf.

Die Dämmstoffzusammensetzung findet insbesondere in der Herstellung von Estrichboden Verwendung. Daneben kann sie jedoch auch als Verfüllung von Hohlräumen, welche durch im wesentlichen vertikal angeordneten Flächen begrenzt sind, verwendet werden. Ein Bespiel für eine solche Anwendung ist die Isolation zwischen zwei Mauern.

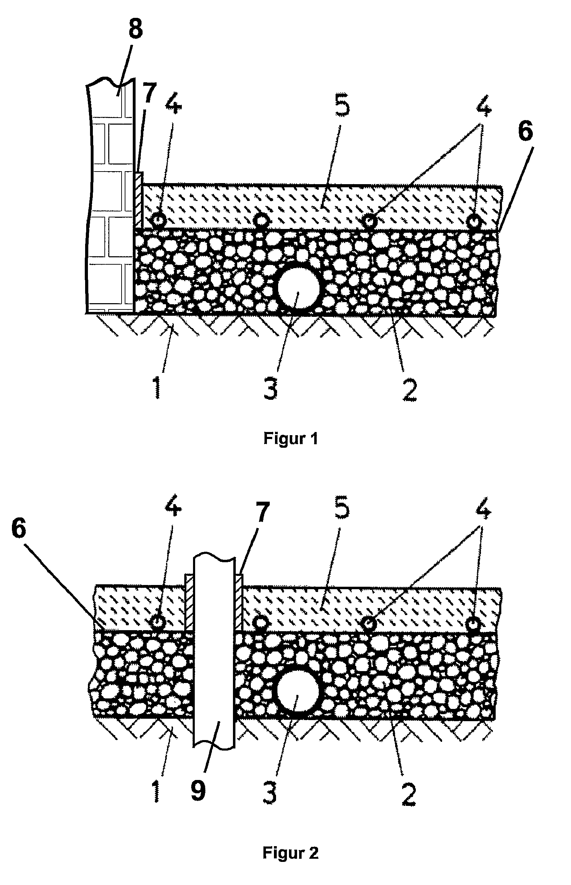

Ein Estrichbodenaufbau erfolgt typischerweise wie in Figur 1 und Figur 2 schematisch dargestellt. Auf den Boden 1 des Bauwerks wird die mit Wasser vermischte Dämmstoffzusammensetzung 2 in einer üblichen Schichtdicke zwischen 7 und 10 cm aufgebracht. In dieser Schicht sind gegebenenfalls Installationsrohre 3 vorhanden. Falls solche Rohre vorhanden sind, ist darauf zu achten, dass sie gut durch die Dämmstoffzusammensetzung 2 umhüllt werden, so dass sich keine Brücken für Schall- oder Wärmeenergie bilden können. Frühestens sobald die Dämmstoffzusammensetzung genügend Festigkeit aufgebaut hat, so dass sie begehbar ist, kann gegebenenfalls eine dünne Trennfolie 6, üblicherweise aus Polyethylen, und gegebenenfalls Fussbodenheizungsrohre 4 verlegt werden. Anschliessend wird ein Zementestrich 5 aufgebracht. Um eine gute Wärme- und Trittschalldämmung zu erreichen, ist darauf zu achten, dass der Zementestrich 5 oder darauf angebrachte Deckbelege stets durch weitere Dämmmaterialien 7 wie Schaumstoffstreifen durch die Dämmschicht 2 durchlaufende Rohre oder Leitungen 9 genügend abgedämmt ist. Eine solche Trennungsschicht mit Dämmeigenschaften ist vorteilhaft ebenfalls im Wandbereich zwischen Wand 8, typischerweise aus Beton oder Backstein gefertigt, und Zementestrich 5 anzubringen.

Die Dämmschicht hat neben der Dämmfunktion gleichzeitig noch die Funktion einer Ausgleichsschicht zum Ausgleichen von Bodenunebenheiten und erleichtert den Einbau von Leitungs- und Installationsrohren. Dies ist besonders wichtig in Renovationsarbeiten, wo für das Einlegen der Leitungen und Rohre der aufwendige und - insbesondere bei einem Betonbodenmühsame Arbeitsschritt des Aufspitzens oder Einfräsens entlang des Bodens wegfällt. Zudem ist es durch das stark reduzierte Gewicht, im Vergleich zu einem konventionellen Ausgleichsboden, möglich auch Böden mit kleiner Tragkraftreserve effizient abzudämmen.

Die erfindungsgemässe Dämmstoffzusammensetzung erhärtet mit Wasser zu einer Masse, bei der die Schaumstoffgranulate durch die Zementmatrix miteinander verbunden sind. Die Schichtdicke des Zementes ist klein und beträgt typischerweise weniger als 0.1 mm.

Es ist selbstverständlich auch möglich, durch den Einsatz von mehr zementösem Bindemittel, und damit weniger Schaumstoffgranulat, die Festigkeit der Dämmstoffzusammensetzung zu erhöhen, wodurch allerdings bei markanter Erhöhung die guten Dämmeigenschaften weitgehend verloren gehen. In Fällen, wo die Dämmeigenschaften nicht von primärem Interesse ist oder gar nicht notwendig ist, kann eine solche Zusammensetzung durchaus interessante Anwendungen haben. So liesse sich beispielsweise das Gewicht eines Bodens für höhere Belastungen markant reduzieren, ohne dass starke Einbussen an der Festigkeit zu erwarten sind.

Für den Einsatz als Dämmstoff ist jedoch ein möglichst grosser Schaumstoffgranulatanteil wie von der Eigenfestigkeit der ausgehärteten Dämmstoffzusammensetzung her noch akzeptierbar anzustreben. Durch die vorliegende Erfindung ist es möglich, den Schaumstoffgranulatanteil bis auf 120 Gew.-% bezogen auf den Zement zu steigern. Aufgrund der Konsistenz der mit Wasser vermischten Dämmstoffzusammensetzung ist einerseits das Egalisieren der Oberfläche vereinfacht und andererseits ein Anbringen auf einer geneigten Fläche ermöglicht. So ist beispielsweise mit der selben Dämmstoffzusammensetzung möglich ein Flachdach, aber auch ein Steildach abzudämmen.

Es wird ermöglicht mit geringem Aufwand eine fugenlose, und damit einwandfrei dämmende, Wärme- und Trittschall-Dämmschicht auch in grossen Schichtstärken zu erstellen, welche nach kurzer Zeit bereits belastbar, beispielsweise begehbar, ist.

Die erfindungsgemässe Dämmstoffzusammensetzung verfügt nach Aushärtung mit Wasser über erstaunlich gute Wärme- und Trittschalldämmungseigenschaften. Es können Wärmedämmeigenschaften bis unter 0.045 W/mK erreicht werden. Es können dynamische Steifigkeiten von unter 20 MN/m$^3$, insbesondere tiefer als 10 MN/m$^3$ erreicht werden. Solche Werte führen erfahrungsgemäss zu einer Trittschallminderung von mehr als 30 dB.

Die Dämmstoffe sind nach kurzer Zeit bereits belastbar. Typsicherweise ist der Festigkeitsaufbau mit zementösen Schnellbindemittels derart, dass sie bereits nach einem bis zwei Tagen begehbar sind.

Die ausgehärteten Dämmstoffe zeichnen sich wesentlich dadurch aus, dass sie bei einer mechanischen Belastung weniger zerstört werden, beziehungsweise nicht stark komprimiert bleiben, sondern ein hohes Rückstellverhalten aufweisen. Dadurch wird gewährleistet, dass die dynamische Steifigkeit und damit die Trittschalldämmung nach einer mechanischen Belastung im wesentlichen unverändert erhalten bleibt. Diese Aussage gilt entsprechend auch für die Wärmedämmung.

Es ist klar, dass dieses Rückstellverhalten durch die Geschwindigkeit und das Ausmass der mechanischen Belastung beeinflusst wird. Durch Variation der Bestandteile der Dämmstoffzusammensetzung wird das Rückstellverhalten deshalb vorzugsweise für die Bereiche der Belastungen optimiert, wie sie beim Verlegen eines Estrichbodens auftreten.

**Beispiele**

Die folgenden Beispiele illustrieren die vorliegende Erfindung.

**<u>Verwendete Rohstoffe</u>**

Tabelle 1. Eingesetzten Rohstoffe.

| Kommerzieller Name | Lieferant | Art | Abkürzung |
|---|---|---|---|
| Culminal C8315 | Hercules GmbH; Aqualon Division, Deutschland | Methyl-Hydroxyethyl-Cellulose | |
| Milke Cem I 52.5 R | Milke, Werk Geseke, Deutschland | Portlandzement | ‚CEM' |
| Metastar 501 | Imerys England | Metakaolin | 'A-WRHM' |
| Methocel 228 | Dow Deutschland | Hydroxypropylmethylcellulose | 'O-WRHM' |
| Methocel 267 | Dow Deutschland | Hydroxyethylmethyl-cellulose | 'O-WRHM' |
| Vinnapas LL 5044 N | Wacker Polymer Systems, Deutschland | Vinylacetat-EthylenCopolymer Pulverdispersion | 'DispKun' |
| Welan Gum | Kelco International, Grossbritanien | Wasserlösliches Polysaccharid aus Fermentationsprozess gewonnen | |

**Wasserrückhaltemittel**

Die Substanzen in Tabelle 2 wurden, wie beschrieben, bei einem w/z-Verhältnis von 0.7 bzw. 0.4 auf das Wasserrückhaltevermögen hin mittels modifiziertem Wolf-II-Methode untersucht.

Tabelle 2. Wasserrückhaltemittel.

| Substanz | Konzentration | WRV | w/z |
|---|---|---|---|
| Metastar 501 | 8 Gew.-% | 22% | 0.4 |
| Metastar 501 | 13 Gew.-% | 39% | 0.4 |
| | | | |
| Culminal C8315 | 0.7 Gew.-% | 95% | 0.7 |
| Culminal C8315 | 1.0 Gew.-% | 99% | 0.7 |
| | | | |
| Mothocell 228 | 0.2 Gew.-% | 41% | 0.7 |
| Mothocoll 228 | 0.7 Gew.-% | 93% | 0.7 |
| Methocell 228 | 1.0 Gew.-% | 98% | 0.7 |
| Methocell 228 | 2.0 Gew.-% | 99% | 0.7 |
| | | | |
| Methocell 267 | 0.2 Gew.-% | 75% | 0.7 |
| Methocell 267 | 0.7 Gew.-% | 99% | 0.7 |
| | | | |
| Welan Gum | 0.75 Gew.-% | 92% | 0.7 |

**Dämmstoffzusammensetzung- und Probekörper-Herstellung**

Zur Herstellung der Probekörper wurde als Basisbindemittel ein sehr frühhochfester Portlandzement (Milke Cem I 52.5 R aus dem Werk Geseke) verwendet.

Es wurden die erfindungsgemässen (**B1, B2**) sowie Vergleichs-(**Ref.1** bis **Ref. 4**) Zusammensetzungen gemäss Tabelle 3 hergestellt. Die dort angegebenen Mengen der mit Wasser vermischten Dämmstoffzusammensetzungen beziehen sich auf kg/m$^3$ der unausgehärteten Nassmischung.

Die Mischungen wurden in einem 10L-Hobart-Mischer wie folgt hergestellt. Recyclat-Polystyrolgranulat (0-8 mm; Schüttdichte 15 kg/m$^3$) und das zementöse Bindemittel mit allenfalls Wasserrückhaltemittel und Dispersionskunststoff wurde vorgelegt und anschliessend das Wasser während dem Mischen zugeben. Die Mischung wurde 5 Minuten gemischt, 10 Minuten ruhen gelassen und dann unter leichter Verdichtung in 20 x 20 x 8cm Formen gefüllt. Alle Proben wurden leicht verdichtet, entsprechend 15 kg Polystyroporgranulat je m$^3$ Schüttung. Es wurden jeweils 3 Probekörper obiger Abmessungen hergestellt und 28 Tage erhärten gelassen.

Das Referenzbeispiel **Ref. 4** wies nach der Herstellung eine derart schlechte Festigkeit aus, dass der Probekörper bereits beim Herausnehmen aus der Form zu einem wesentlichen Teil zerbröselte und deshalb nicht den Messungen unterzogen werden konnte.

Tabelle 3. Dämmstoffzusammensetzungen mit Wasser vermischt.

|  | *Ref. 1* | *Ref. 2* | *Ref. 3* | *B1* | *Ref. 4* | *Ref. 5* | *Ref. 6* | *B2* |
|---|---|---|---|---|---|---|---|---|
| Cem | 59.05 | 54.33 | 58.63 | 53.69 | 21.46 | 21.46 | 21.45 | 21.46 |
| Metastar 501 |  | 4.72 |  |  |  |  |  |  |
| Methocel 228 |  |  | 0.42 | 0.41 |  |  | 0.64 | 0.64 |
| DispKun |  |  |  | 4.95 |  | 2.15 |  | 2.15 |
| Wasser | 59.05 | 59.05 | 59.05 | 59.05 | 42.92 | 42.93 | 42.9 | 42.92 |
| Polystyrol | 15 | 15 | 15 | 15 | 15 | 15 | 15 | 15 |
| Total | 133.1 | 133.1 | 133.1 | 133.1 | 79.38 | 81.54 | 79.99 | 82.17 |
|  |  |  |  |  |  |  |  |  |
| W/Z | 1.0 | 1.1 | 1.0 | 1.1 | 2.0 | 2.0 | 2.0 | 2.0 |
| Polystyrol [%]* | 11% | 11% | 11% | 11% | 19% | 18% | 18.8% | 18% |
| Cem [%]* | 44% | 41% | 44% | 40% | 27% | 26% | 27% | 26% |
| A-WRHM [%]* |  | 3.5% |  |  |  |  |  |  |
| O-WRHM [%]* |  |  | 0.3% | 0.3% |  |  | 0.8% | 0.8% |
| DispKun [%]* |  |  |  | 3.7% |  | 2.7% |  | 2.7% |
|  |  |  |  |  |  |  |  |  |
| A-WRHM/Cem |  | 8.7% |  |  |  |  |  |  |
| O-WRHM/Cem |  |  | 0.7% | 0.8% |  |  | 3.0% | 3.0% |
| DispKun/Cem |  |  |  | 9.2% |  | 10.0% |  | 10.0% |
| Polystyrol/Cem | 25.4% | 27.6% | 25.6% | 27.9% | 69.9% | 69.9% | 69.9% | 69.9% |
| * bezogen auf Zusammensetzung=100%. | | | | | | | | |

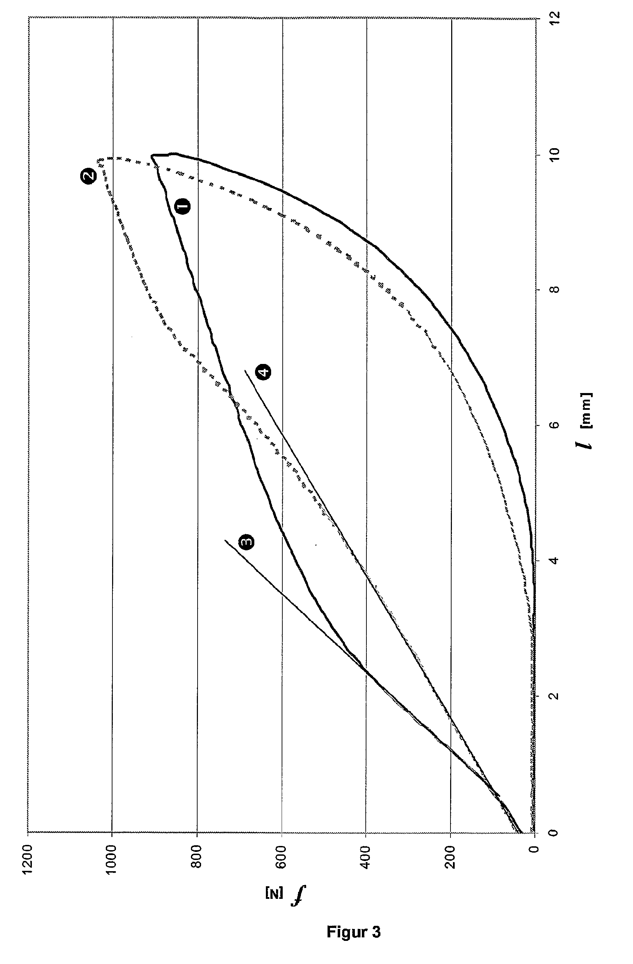

An jeweils zwei der 8 cm dicken Probekörper (20 x 20 cm Querschnitt) der jeweiligen Dämmstoff-Zusammensetzungen aus Tabelle 3 wurden DruckE-Modul gemessen, wobei in einer servohydraulischen Druckprüfmaschine linear mit einem Vorschub von 1 mm/sek. bis zu einer Stauchung von 10mm mittels Druckplatte belastet, anschliessend entlastet, die Reststauchung gemessen und neuerlich mit einem Vorschub von 1 mm/sek. bis auf 10 mm belastet wurde. Die notwendige Kraft wurde in Abhängigkeit der Einfederung aufgezeichnet. Im linearen Bereich der Stauchung Kraft(*f*)-Weg(*f*)-Diagramm wurde der E-Modul [N/mm$^2$] aus der Steigung der an die Kurve angelegte Ausgleichsgerade durch Multiplikation mit der Dicke (80mm) und Division durch die Fläche (200mm*200mm) des Probekörpers bestimmt, wie dies im Messdiagramm in Figur 3 für **B2** beispielsweise dargelegt wird. So wurden die erste Ausgleichsgerade ('❸') für die erste Stauchung ('❶') und die zweite Ausgleichsgerade ('❹') für die zweite Stauchung ('❷') ermittelt., In diesem Kraft(*f*)-Weg(*f*)-Diagramm ist die erste Stauchung mit ('❶') und die zweite Stauchung mit ('❷') bezeichnet. Zum besseren Vergleich wurde in Tabelle 4 auch die prozentuale Zunahme bezogen auf die jeweilige Referenz, die weder Wasserrückhaltemittel noch Dispersionskunststoff enthält, angegeben.

Des weiteren wurde die maximale Kraft (bei 10 mm (= 12.5 %) Stauchung bestimmt und daraus in eine Belastung in kg/m$^2$ umgerechnet.

Alle Resultate sind die Mittelwerte der zwei Messungen.

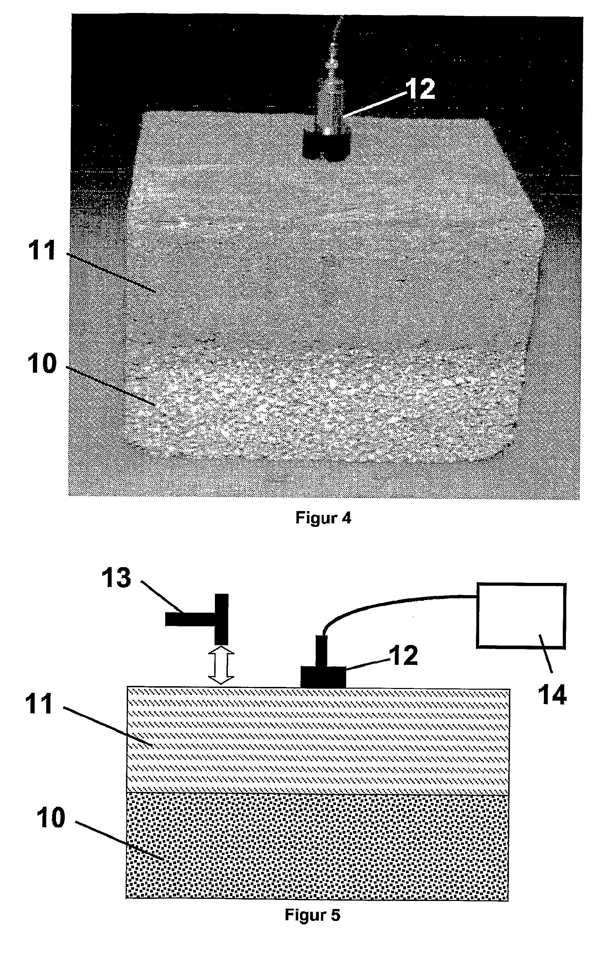

Die dritte Probe 10 jeder Zusammensetzung aus Tabelle 3 wurde mit 8 cm Estrich 11 beschichtet und nach 28 Tagen die dynamische Steifigkeit vor und nach 5 mm Stauchung mittels Ausschwingversuch über Ermittlung der Eigenfrequenz der Probe bestimmt. Die Messanordnung ist hierfür in Figur 4 und Fig. 5 abgebildet. Auf die Estrichschicht 11 wurde der Beschleunigungsaufnehmer "PSB 302B03" 12 aufgesetzt. Durch einen leichten Stoß mit einem Impulshammer 13 wurden nun Schwingungen in den Dämmstoff induziert, welche mit dem Beschleunigungsaufnehmer detektiert und in dem FFT-Analysator "AND AD-3524 FFT Analyzer" 14 weiterverarbeitet wurden. Dadurch war es möglich, die Eigenfrequenz des Dämmstoffes zu bestimmen, aus der sich die dynamische Steifigkeit $C_d$ [MN/m³] wie folgt errechnet:

$$C_d = \frac{(2\pi f)^2 m}{A}$$

mit

*f* = gemessene Eigenfrequenz in Hz

*m* = schwingende Masse (Estrich)

A = Auflagefläche der Proben

Tabelle 4. Messergebnisse von Dämmstoffzusammensetzungen.

| | *Ref. 1* | *Ref. 2* | *Ref. 3* | *B1* | *Ref. 4* | *Ref. 5* | *Ref. 6* | *B2* |
|---|---|---|---|---|---|---|---|---|
| **Druckmodul** | | | | | | | | |
| Stauchung 1 [N/mm²] | 0.784 | 0.917 | 1.149 | 1.229 | n.b.** | 0.250 | 0.341 | 0.348 |
| Stauchung 2 [N/mm²] | 0.375 | 0.479 | 0.521 | 0.622 | n.b.** | 0.135 | 0.157 | 0.192 |
| Zunahme 1 [%]* | 0 | 17.0 | 46.6 | 56.8 | n.b.** | 0 | 36.4 | 39.2 |
| Zunahme 2 [%]* | 0 | 27.7 | 38.9 | 65.9 | n.b.** | 0 | 16.3 | 42.2 |
| | | | | | | | | |
| **Belastung bei 10 mm Stauchung** | | | | | | | | |
| Stauchung 1 [kg/m²] | 4179 | 4740 | 5352 | 6356 | n.b. | 1650 | 1874 | 2317 |
| Stauchung 2 [kg/m²] | 4871 | 5568 | 6481 | 7446 | n.b.** | 1797 | 2148 | 2633 |
| Zunahme 1 [%]* | 0 | 13.4 | 28.1 | 52.1 | n.b.** | 0 | 13.6 | 40.4 |
| Zunahme 2 [%]* | 0 | 14.3 | 33.1 | 52.9 | n.b.** | 0 | 19.5 | 46.5 |
| | | | | | | | | |
| **Dyn. Steifigkeit [MN/m³]** | | | | | | | | |
| Unbelastet | 33.2 | 50.1 | 51.8 | 36.9 | n.b. | 10.6 | 12.8 | 13.5 |
| Belastet | 14.7 | 13.4 | 20.4 | 17.1 | n.b.** | 4.9 | 5.6 | 6.9 |
| * bezogen auf *Ref.1* bzw. auf *Ref.* 5.<br>** nicht bestimmbar | | | | | | | | |

Die Versuche *Ref. 1* bis *Ref. 3* und *B1* in Tabelle 4 mit einem Polystyrol/Zement- Verhältnis von annähernd 25 Gew.-%, beziehungsweise einem Zementgehalt zwischen 54 - 59 kg/m³, zeigen, dass die durch ein Wasserrückhaltemittel -Metakaolin **(Ref 2)** bzw. Celluloseether *(Ref. 3)* **-** allein modifizierten Proben bereits deutlich verbesserten Festigkeiten aufweisen, welche durch den Einsatz einer sprühgetrockneten Kunststoffdispersion nochmals deutlich verbessert werden konnten (*B1*). Der Vergleich von *Ref. 3* und *B1* zeigt, dass die erfindungsgemässe Zusammensetzung *B1* zwar höhere Druck-E-Modul-Werte aufweisen und trotzdem markant niedrigere dynamische Steifigkeiten aufweisen.
Somit ist eine weitere Reduktion des Zementes, respektive eine Erhöhung Polystyrol/Zement-Verhältnisses, möglich, so dass die Dämmeigenschaften stark verbessert werden, und die Festigkeitswerte in Rahmen eines Systems des Standes der Technik liegt.

Die Versuche *Ref. 5, Ref. 6* und *B2* mit einem Polystyrol/Zement-Verhältnis von annähernd 70 Gew.-%, beziehungsweise einem Zementgehalt von etwa 21.5 kg/m$^3$, zeigen, dass, weil wie bereits erwähnt, der Nullvergleich *Ref. 4* nicht gemessen werden konnte, sowohl der Zusatz von lediglich Dispersionskunststoff *(Ref 5)* oder lediglich Wasserrückhaltemittel *(Ref. 6)* bereits deutlich verbesserten Festigkeiten aufweisen. Diese Festigkeit wird nochmals signifikant bei der erfindungsgemässen Zusammensetzung *B2,* welche Dispersionskunststoff und Wasserrückhaltemittel enthält, gesteigert.

Die Probe mit lediglich Dispersionskunststoff *(Ref. 5)* zeigte einen markanten Einbruch im E-Modul bei der zweiten Belastung, was auf die Zerstörung der Bindungen durch die erste Belastung hindeutet. Dies ist bei der Probe *B2* nicht der Fall und zeigt dass die Bindungen nicht oder massiv weniger zerstört werden.

Es sind somit mit den erfindungsgemässen Zusammensetzungen mechanisch belastbare Dämmstoffe erhältlich, die ein äusserst hohes Polystyrol/Zement- Verhältnis, und damit äusserst hohe Dämmeigenschaften aufweisen, wie sie mit den dem Stand der Technik entsprechenden zementösen Systemen nicht erreichbar sind.

Tabelle 5 zeigt, dass die Erhöhung des Dispersionskunststoffgehaltes in der Zusammensetzung nicht zu einer Reduktion der dynamischen Steifigkeit, sprich nicht zu einer Verbesserung der Dämmeigenschaft, sondern zu einem Anstieg der dynamischen Steifigkeit führt.

Tabelle 5. Dämmstoffzusammensetzungen mit Wasser vermischt und Resultate.

| | *B3* | *Ref. 7* | *Ref. 8* |
|---|---|---|---|
| Cem | 40.00 | 40.00 | 40.00 |
| Metastar 501 | | | |
| Methocel 228 | 0.50 | 0.50 | 0.50 |
| DispKun | 2.80 | 8.00 | 16.00 |
| Wasser | 50.00 | 50.00 | 50.00 |
| Polystyrol | 14 | 14 | 14 |
| Total | 102.1 | 112.5 | 120.4 |
| | | | |
| W/Z | 1.25 | 1.25 | 1.25 |
| Polystyrol [%]* | 14% | 12% | 12% |
| Cem [%]* | 39% | 36% | 33% |
| A-WRHM [%]* | | | |
| O-WRHM [%]* | 0.5% | 0.4% | 0.4% |
| DispKun [%]* | 2.7% | 7.1% | 13.3% |
| | | | |
| A-WRHM/Cem | | | |
| O-WRHM/Cem | 1.3% | 1.3% | 1.3% |
| DispKun/Cem | 7.0% | 20.0% | 40.0% |
| Polystyrol/Cem | 35.0% | 35.0% | 35.0% |
| | | | |
| Dyn. Steifigkeit [MN/m$^3$] | | | |
| unbelastet | 11.2 | 10.9 | 14.7 |
| belastet (5mm Stauchung) | 5.4 | 6.4 | 7.9 |
| Belastung (5mm Stauchung) [kg/m$^2$] | 2040 | 2600 | 3570 |

(fortgesetzt)

| | B3 | Ref. 7 | Ref. 8 |
|---|---|---|---|
| Stauchung** <br> (Belastung 30kN/m$^2 \overset{\wedge}{=}$ 3058 kg/m$^2$) [mm] | 9.44 | 7.04 | 3.85 |
| * bezogen auf Zusammensetzung=100%. <br> **Stauchung hier bei fixer Belastungskraft (30kN/m$^2$) gemessen | | | |

**Patentansprüche**

1. Dämmstoffzusammensetzung zur Trittschall- und Wärmedämmung, umfassend ein polymeres geschlossenzelliges Schaumstoffgranulat und ein zementöses Bindemittel, **dadurch gekennzeichnet, dass** die Dämmstoffzusammensetzung mindestens ein Wasserrückhaltemittel und mindestens ein Dispersionskunststoff umfasst, dass der Zementanteil unter 100 kg/m$^3$ der mit Wasser angemachten Dämmstoffzusammensetzung beträgt, dass die Menge des Dispersionskunststoff in einer Menge von 2 bis 15 Gewichts-% Trockenmasse bezogen auf den Zement beträgt und dass die Dämmstoffzusammensetzung frei von amorpher Kieselsäure ist.

2. Dämmstoffzusammensetzung gemäss Anspruch 1, **dadurch gekennzeichnet, dass** der Gewichtsanteil der Summe aller Wasserrückhaltemittel, bezogen auf den Zement zwischen 0.1 Gew.-% und 25 Gew.-% beträgt.

3. Dämmstoffzusammensetzung gemäss Anspruch 1 oder 2, **dadurch gekennzeichnet, dass** das Wasserrückhaltemittel eine organische Verbindung ist und dass der Gewichtsanteil der Summe aller organischer Wasserrückhaltemittel zwischen 0.1 und 9 Gew.-%, bevorzugt zwischen 0.5 und 5 Gew.-%, insbesondere zwischen 0.7 und 4 Gew.-%, bezogen auf den Zement, liegt.

4. Dämmstoffzusammensetzung gemäss einem der Ansprüche 1-3, **dadurch gekennzeichnet, dass** das Wasserrückhaltemittel ein Stärkeether, Cellulosederivat, Welan Gum oder ein synthetischer Verdicker, insbesondere eine Hydroxyalkylmethylcellulose, bevorzugt eine Hydroxypropylmethylcellulose oder eine Hydroxyethylmethylcellulose, ist.

5. Dämmstoffzusammensetzung gemäss Anspruch 1 oder 2, **dadurch gekennzeichnet, dass** das Wasserrückhaltemittel eine anorganische Verbindung ist und dass der Gewichtsanteil der Summe aller anorganischen Wasserrückhaltemittel zwischen 0.2 und 25 Gew.-%, insbesondere zwischen 0.5 und 9 Gew.-%, bezogen auf den Zement, liegt.

6. Dämmstoffzusammensetzung gemäss Anspruch 5, **dadurch gekennzeichnet, dass** das Wasserrückhaltemittel ein Mehrschichtsilikat oder ein kalziniertes Kaolin, bevorzugt Metakaolin, ist.

7. Dämmstoffzusammensetzung gemäss einem der vorhergehenden Ansprüche, **dadurch gekennzeichnet, dass** das Verhältnis des Schaumstoffgranulats zu Zement zwischen 20 Gew.-% und 120 Gew.-%, bevorzugt zwischen 30 Gew.-% und 100 Gew.-%, insbesondere zwischen 50 Gew.-% und 75 Gew.-%, besonders bevorzugt zwischen 60 Gew.-% und 75 Gew.-% liegt.

8. Dämmstoffzusammensetzung gemäss einem der vorhergehenden Ansprüche, **dadurch gekennzeichnet, dass** der Dispersionskunststoff ein Copolymer von mindestens zwei ethylenisch ungesättigten Monomeren, insbesondere ausgewählt aus der Gruppe Ethylen, Butadien, Methacrylsäure, Acrylsäure, Methacrylsäureestern, Acrylsäureestern, Styrol, Vinylacetat und Acrylnitril ist.

9. Dämmstoffzusammensetzung gemäss Anspruch 8, **dadurch gekennzeichnet, dass** der Dispersionskunststoff ein Copolymer Acrylsäure/Styrol oder Methacrylsäure/Styrol oder Vinylacetat/Ethylen, insbesondere ein Copolymer Acrylsäure/Styrol oder Methacrylsäure/Styrol, ist.

10. Dämmstoffzusammensetzung gemäss einem der vorhergehenden Ansprüche, **dadurch gekennzeichnet, dass** der Dispersionskunststoff ein Molekulargewicht zwischen 30'000 und 10'000'000 g/mol, insbesondere zwischen 100'000 und 5'000'000 g/mol, bevorzugt zwischen 200'000 und 2'000'000 g/mol, aufweist.

11. Dämmstoffzusammensetzung gemäss einem der vorhergehenden Ansprüche, **dadurch gekennzeichnet, dass** das zementöse Bindemittel mindestens einen Portlandzement enthält.

12. Dämmstoffzusammensetzung gemäss Anspruch 11, **dadurch gekennzeichnet, dass** das zementöse Bindemittel neben mindestens einem Portlandzement weiterhin mindestens einen Sulfoaluminatzement oder mindestens einen Tonerdeschmelzzement enthält.

13. Dämmstoffzusammensetzung gemäss einem der vorhergehenden Ansprüche, **dadurch gekennzeichnet, dass** das zementöse Bindemittel mindestens einen Tonerdeschmelzzement oder eine andere Aluminatquelle und gegebenenfalls Calciumsulfat, in Form von Anhydrit, Halbhydrat- oder Dihydratgips; und/oder Calciumhydroxid enthält.

14. Dämmstoffzusammensetzung gemäss einem der vorhergehenden Ansprüche, **dadurch gekennzeichnet, dass** das polymere geschlossenzellige Schaumstoffgranulat ein Polystyrolgranulat ist.

15. Dämmstoffzusammensetzung gemäss einem der vorhergehenden Ansprüche, **dadurch gekennzeichnet, dass** polymeres geschlossenzelliges Schaumstoffgranulat eine Schüttdichte zwischen 10 und 20 kg/m$^3$, insbesondere zwischen 12 und 18 kg/m$^3$, aufweist.

16. Dämmstoffzusammensetzung gemäss einem der vorhergehenden Ansprüche, **dadurch gekennzeichnet, dass** die Zusammensetzung zusätzlich mindestens einen weiteren Füllstoff, welcher kein geschlossenzelliges Schaumstoffgranulat, kein zementöses Bindemittel, kein Wasserrückmittel und kein Dispersionskunststoff ist und dessen mittlere Teilchengrösse so gewählt ist, dass das Verhältnis mittlere Teilchengrösse Füllstoff zu mittlere Teilchengrösse des geschlossenzelligen Schaumstoffgranulates kleiner 1, insbesondere zwischen 0.02 - 0.25 ist.

17. Dämmstoffzusammensetzung gemäss Anspruch 16, **dadurch gekennzeichnet, dass** der Füllstoff ein elastischer Füllstoff ist, insbesondere ein Gummi oder ein Kautschuk.

18. Dämmstoff, **dadurch gekennzeichnet, dass** er aus einer Dämmstoffzusammensetzung gemäss einem der Ansprüche 1 bis 17 und Wasser in einer Menge entsprechend einem Wasser/Zement-Verhältnis 0.7 bis 3, insbesondere 0.7 bis 2.5, bevorzugt 1.1 bis 2.5, erhalten wird.

19. Verfahren zur Aushärtung einer Dämmstoffzusammensetzung gemäss einem der Ansprüche 1 bis 17, **dadurch gekennzeichnet, dass** es einen Schritt des Beimischens von Wasser und des Aushärtens umfasst.

20. Verfahren gemäss Anspruch 19, **dadurch gekennzeichnet, dass** die Gesamtmenge entsprechend einem Wasser/Zement-Verhältnis von 0.7 bis 3, insbesondere 0.7 bis 2.5, bevorzugt 1.1 bis 2.5, erhalten wird.

21. Verwendung einer Dämmstoffzusammensetzung gemäss einem der Ansprüche 1 bis 17, **dadurch gekennzeichnet, dass** die Dämmstoffzusammensetzung nach Vermischung mit Wasser auf einem Boden appliziert und ausgehärtet wird.

22. Verwendung einer Dämmstoffzusammensetzung gemäss einem der Ansprüche 1 bis 17 in einem Estrichaufbau.

## Claims

1. Insulating composition for soundproofing and thermal insulation, comprising a closed-cell foam polymer granulate and a cement adhesive promoter, **characterized in that** the insulating composition comprises at least one water retention agent and at least one dispersion plastic, the cement fraction is below 100 kg/m$^3$ of the insulating composition prepared with water, the quantity of the dispersion plastic is 2 to 15 wt. % of dry mass referred to the cement, and the insulating composition is free of amorphous silicic acid.

2. Insulating composition according to claim 1, **characterized in that** the weight fraction of the sum of all water retention agents, referred to the cement, is between 0.1 wt. % and 25 wt. %.

3. Insulating composition according to claim 1 or 2, **characterized in that** the water retention agent is an organic compound and the weight fraction of the sum of all organic water retention agents is between 0.1 and 9 wt. %, preferably between 0.5 and 5 wt. %, especially between 0.7 and 4 wt. %, referred to the cement.

4. Insulating composition according to one of claims 1 to 3, **characterized in that** the water retention agent is a starch ether, cellulose derivate, welan gum or a synthetic thickener, especially a hydroxyalkylmethyl cellulose, preferably a hydroxypropylmethyl cellulose or a hydroxyethylmethyl cellulose.

5. Insulating composition according to claim 1 or 2, **characterized in that** the water retention agent is an inorganic compound and the weight fraction of the sum of all inorganic water retention agents is between 0.2 and 25 wt. %, especially between 0.5 and 9 wt. %, referred to the cement.

6. Insulating composition according to claim 5, **characterized in that** the water retention agent is a phyllosilicate or a calcined kaolin, preferably metakaolin.

7. Insulating composition according to one of the preceding claims, **characterized in that** the ratio of the foam granulate to the cement is between 20 wt. % and 120 wt. %, preferably between 30 wt. % and 100 wt. %, especially between 50 wt. % and 75 wt. %, especially preferably between 60 wt. % and 75 wt. %.

8. Insulating composition according to one of the preceding claims, **characterized in that** the dispersion plastic is a copolymer of at least two unsaturated ethylene monomers, especially chosen from the group of ethylene, butadiene, methacrylic acid, acrylic acid, methacrylic acid esters, acrylic acid esters, styrene, vinyl acetate and acrylonitrile.

9. Insulating composition according to claim 8, **characterized in that** the dispersion plastic is a copolymer of acrylic acid and styrene, or methacrylic acid and styrene, or vinyl acetate and ethylene, especially a copolymer of acrylic acid and styrene or methacrylic acid and styrene.

10. Insulating composition according to one of the preceding claims, **characterized in that** the dispersion plastic has a molecular weight between 30,000 and 10,000,000 g/mol, especially between 100,000 and 5,000,000 g/mol, preferably between 200,000 and 2,000,000 g/mol.

11. Insulating composition according to one of the preceding claims, **characterized in that** the cement adhesive promoter contains at least one Portland cement.

12. Insulating composition according to claim 11, **characterized in that** the cement adhesive promoter contains, besides at least one Portland cement, also at least one sulfoaluminate cement or at least one calcium aluminate cement..

13. Insulating composition according to one of the preceding claims, **characterized in that** cement adhesive promoter contains at least one calcium aluminate cement or another aluminate source and optionally calcium sulfate, in the form of anhydrite, semihydrate or dihydrate gypsum, and/or calcium hydroxide.

14. Insulating composition according to one of the preceding claims, **characterized in that** the closed-cell foam polymer granulate is a polystyrene granulate.

15. Insulating composition according to one of the preceding claims, **characterized in that** the closed-cell foam polymer granulate has a bulk density between 10 and 20 kg/m$^3$, especially between 12 and 18 kg/m$^3$.

16. Insulating composition according to one of the preceding claims, **characterized in that** the composition additionally [contains] at least one additional filler, which is not a closed-cell foam granulate, not a cement adhesive promoter, not a water retention agent and not a dispersion plastic, and whose mean particle size is chosen such that the ratio of the mean particle size of filler to the mean particle size of the closed-cell foam granulate is less than 1, especially between 0.02 and 0.25.

17. Insulating composition according to claim 16, **characterized in that** the filler is an elastic filler, especially a synthetic or natural rubber.

18. Insulator, **characterized in that** it is obtained from an insulating composition according to one of claims 1 to 17 and water in a quantity corresponding to a water to cement ratio of 0.7 to 3, especially 0.7 to 2.5, preferably 1.1 to 2.5.

19. Method for curing an insulating composition according to one of claims 1 to 17, **characterized in that** it comprises one step of adding water to the mixture and curing.

**20.** Method according to claim 19, **characterized in that** the total quantity is obtained corresponding to a water to cement ratio of 0.7 to 3, especially 0.7 to 2.5, preferably 1.1 to 2.5.

**21.** Use of an insulating composition according to one of claims 1 to 17, **characterized in that** the insulating composition after mixing with water is applied to a floor and cured.

**22.** Use of an insulating composition according to one of claims 1 to 17 in a screed top.

**Revendications**

**1.** Composition isolante pour l'insonorisation et l'isolation thermique, comprenant un granulé de polymère de mousse à cellules fermées et un promoteur d'adhérence de ciment, **caractérisée en ce que** la composition isolante comprend au moins un agent de rétention d'eau et au moins un plastique de dispersion, la fraction de ciment se situe en-dessous de 100 kg/m$^3$ de la composition isolante préparée avec de l'eau, la quantité du plastique de dispersion est de 2 à 15 % en poids de la masse sèche par rapport au ciment, et la composition isolante est exempte d'acide silicique amorphe.

**2.** Composition isolante selon la revendication 1, **caractérisée en ce que** la fraction en poids de la somme de tous les agents de rétention d'eau, par rapport au ciment, se situe entre 0,1 % en poids et 25 % en poids.

**3.** Composition isolante selon la revendication 1 ou 2, **caractérisée en ce que** l'agent de rétention d'eau est un composé organique et la fraction en poids de la somme de tous les agents de rétention d'eau organiques se situe entre 0,1 et 9 % en poids, de préférence entre 0,5 et 5 % en poids, en particulier entre 0,7 et 4 % en poids, par rapport au ciment.

**4.** Composition isolante selon l'une des revendications 1 à 3, **caractérisée en ce que** l'agent de rétention d'eau est un éther d'amidon, un dérivé de cellulose, une gomme welan ou un épaississant synthétique, en particulier un hydroxyalkylméthyle cellulose, de préférence un hydroxypropylméthyle cellulose ou un hydroxyéthylméthyle cellulose.

**5.** Composition isolante selon la revendication 1 ou 2, **caractérisée en ce que** l'agent de rétention d'eau est un composé inorganique et la fraction en poids de la somme de tous les agents de rétention d'eau inorganiques se situe entre 0,2 et 25 % en poids, en particulier entre 0,5 et 9 % en poids, par rapport au ciment.

**6.** Composition isolante selon la revendication 5, **caractérisée en ce que** l'agent de rétention d'eau est un phyllosilicate ou un kaolin calciné, de préférence un métakaolin.

**7.** Composition isolante selon l'une des revendications précédentes, **caractérisée en ce que** le rapport du granulé de mousse par rapport au ciment se situe entre 20 % en poids et 120 % en poids, de préférence entre 30 % en poids et 100 % en poids, en particulier entre 50 % en poids et 75 % en poids, en particulier de préférence entre 60 % en poids et 75 % en poids.

**8.** Composition isolante selon l'une des revendications précédentes, **caractérisée en ce que** le plastique de dispersion est un copolymère d'au moins deux monomères d'éthylène insaturés, en particulier choisis dans le groupe constitué d'éthylène, de butadiène, d'acide méthacrylique, d'acide acrylique, d'esters d'acide méthacrylique, d'esters d'acide acrylique, de styrène, d'acétate de vinyle et d'acrylonitrile.

**9.** Composition isolante selon la revendication 8, **caractérisée en ce que** le plastique de dispersion est un copolymère d'acide acrylique et de styrène, ou d'acide méthacrylique et de styrène, ou d'acétate de vinyle et d'éthylène, en particulier un copolymère d'acide acrylique et de styrène ou d'acide méthacrylique et de styrène.

**10.** Composition isolante selon l'une des revendications précédentes, **caractérisée en ce que** le plastique de dispersion a un poids moléculaire situé entre 30 000 et 10 000 000 g/mol, en particulier entre 100 000 et 5 000 000 g/mol, de préférence entre 200 000 et 2 000 000 g/mol.

**11.** Composition isolante selon l'une des revendications précédentes, **caractérisée en ce que** le promoteur d'adhérence de ciment contient au moins un ciment Portland.

**12.** Composition isolante selon la revendication 11, **caractérisée en ce que** le promoteur d'adhérence de ciment contient, en plus d'au moins un ciment Portland, également au moins un ciment de sulfoaluminate ou au moins un ciment d'aluminate de calcium.

**13.** Composition isolante selon l'une des revendications précédentes, **caractérisée en ce que** le promoteur d'adhérence de ciment contient au moins un ciment d'aluminate de calcium ou une autre source d'aluminate et éventuellement du sulfate de calcium, sous la forme d'anhydrite, de gypse semi-hydraté ou dihydraté, et/ou d'hydroxyde de calcium.

**14.** Composition isolante selon l'une des revendications précédentes, **caractérisée en ce que** le granulé de polymère de mousse à cellules fermées est un granulé de polystyrène.

**15.** Composition isolante selon l'une des revendications précédentes, **caractérisée en ce que** le granulé de polymère de mousse à cellules fermées a une densité en vrac entre 10 et 20 kg/m$^3$, en particulier entre 12 et 18 kg/m$^3$.

**16.** Composition isolante selon l'une des revendications précédentes, **caractérisée en ce que** la composition [contient] en outre au moins une charge supplémentaire, qui n'est pas un granulé de mousse à cellules fermées, ni un promoteur d'adhérence de ciment, ni un agent de rétention d'eau et ni un plastique de dispersion, et dont la taille moyenne de particule est choisie de sorte à ce que le rapport de la taille de particule moyenne de la charge à la taille de particule moyenne du granulé de mousse à cellules fermées soit inférieur à 1, en particulier entre 0,02 et 0,25.

**17.** Composition isolante selon la revendication 16, **caractérisée en ce que** la charge est une charge élastique, en particulier un caoutchouc synthétique ou naturel.

**18.** Isolant, **caractérisé en ce qu'**il est obtenu à partir d'une composition isolante selon l'une des revendications 1 à 17 et de l'eau dans une quantité correspondant à un rapport eau/ciment de 0,7 à 3, en particulier 0,7 à 2,5, de préférence 1,1 à 2,5.

**19.** Procédé de durcissement d'une composition isolante selon l'une des revendications 1 à 17, **caractérisé en ce qu'**il comprend une étape consistant à ajouter de l'eau pour le mélange et le durcissement.

**20.** Procédé selon la revendication 19, **caractérisé en ce que** la quantité totale est obtenue correspondant à un rapport eau/ciment de 0,7 à 3, en particulier 0,7 à 2,5, de préférence 1,1 à 2,5.

**21.** Utilisation d'une composition isolante selon l'une des revendications 1 à 17, **caractérisée en ce que** la composition isolante, avoir été mélangée à de l'eau, est appliquée sur un sol et durcie.

**22.** Utilisation d'une composition isolante selon l'une des revendications 1 à 17 dans une chape supérieure.

Figur 1

Figur 2

**Figur 3**

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3345550 A1

- EP 0819662 A